# EUROPÄISCHE PATENTANMELDUNG

(11) **EP 4 496 196 A1**
(43) Veröffentlichungstag der Anmeldung: **22.01.2025**
(21) Anmeldenummer: 24188416.2
(22) Anmeldetag: 12.07.2024
(51) Int. Cl.: H02K 15/00, B23K 26/03

(54) **VERFAHREN ZUR ERFASSUNG VON FREIEN ENDEN VON STECKSPULEN IN EINEM STATOR**

(30) Priorität: 21.07.2023 DE 102023119420
(71) Anmelder: Gehring Technologies GmbH + Co. KG, 73760 Ostfildern (DE)
(72) Erfinder: Starke, Stephan, 73734 Esslingen (DE)
(74) Vertreter: DREISS Patentanwälte PartG mbB

(57) **Zusammenfassung**

Die vorliegende Erfindung betrifft ein Verfahren zur Erfassung der Position von freien Enden von Steckspulen in einem Stator.

## Beschreibung

Die vorliegende Erfindung betrifft ein Verfahren zur Erfassung von Steckspulenpositionen in einem Stator bzw. zur Erfassung der Position derer freien Enden.

Der Stator umfasst ein Blechpaket und Steckspulen. Die Steckspulen weisen freie Enden auf, die aus dem Blechpaket herausragen. Steckspulen können Einzelpins oder auch beispielsweise Hairpins sein. Mit Hairpins werden üblicherweise U-förmig ausgebildete Steckspulen, mit zwei Schenkeln mit jeweiligen freien Enden und einem diese Schenkel verbindenden Verbindungsabschnitt bezeichnet. Der Verbindungsabschnitt liegt dabei den freien Enden gegenüber.

Der Erfindung liegt die Aufgabe zugrunde eine möglichst zuverlässige und genaue Methode zur Erfassung der Position der Steckspulen bereitzustellen.

Die Aufgabe wird durch ein Verfahren nach Anspruch 1 und eine Vorrichtung nach Anspruch 12 gelöst. Die Unteransprüche sowie Teile der Beschreibung beschreiben vorteilhafte Weiterbildungen der Erfindung.

Die Erfassung der Position der Steckspulen im Sinne des vorliegenden Verfahrens kann an verschiedenen Zeitpunkten bei der Bearbeitung von Statoren erfolgen. Die Erfassung der Position der Steckspulen erfolgt nach dem Bestücken des Stators mit den Steckspulen und kann bspw. vor dem Verbinden bzw. Verschweißen der freien Enden der Steckspulen miteinander erfolgen. Durch das Erfassen kann eine Kontrolle der korrekten Ausrichtung und Position der Steckspulen erfolgen. Dies kann vor und/oder nach weiteren Verarbeitungsschritten erfolgen. So kann beispielsweise sichergestellt werden, dass die Steckspulen für einen anschließenden Verschweißvorgang korrekt angeordnet sind. Das Erfassen der Position der Steckspulen und ggf. auch Form der freien Enden der Steckspulen kann auch zur Kontrolle der Schweißnahtqualität dienen. Bei der Erfassung der Position wird der Verlauf der Oberflächen der freien Enden im Raum ermittelt.

Das erfindungsgemäße Verfahren umfasst die Schritte:
- Schritt I: Platzieren des Stators in einem Messbereich eines Profilsensors, so dass eine Oberfläche des Stators mit freien Enden sich im Messbereich des Profilsensors befindet;

Die Verwendung verschiedener Messeinrichtungen als Profilsensor ist möglich. Beispielsweise kann ein Laserliniensensor verwendet werden. Ein Laserliniensensor kann mittels Triangulation den Abstand einzelner Messpunkte entlang einer Linie zum Sensor ermitteln. Auch die Verwendung mehrerer einzelner Sensoren, die gemeinsam als Profilsensor die Oberfläche vermessen ist im Sinne der Erfindung.

Bei Verwendung eines Laserliniensensors kann der Stator unter dem Laserliniensensor rotiert werden und hierdurch können die einzelnen pintragenden Bereiche des Stators durch den linienförmigen Erfassungsbereich des Liniensensors bewegt werden. Die einzelnen linienförmigen Messungen (Reihe von Punkten) werden aneinander angefügt, um quasi einen zweidimensionalen Messbereich mit jeweiligen Abstandsinformationen (Abstand zum Sensor) bzw. HöhenInformationen zu jedem der Messpunkte zu erstellen. Der Profilsensor kann mehrere Messeinrichtungen bzw. Sensoren umfassen, bspw. mehrere Laserliniensensoren. Der Profilsensor kann auch eine stereoskopische Messeinrichtung und/oder eine oder mehrere andersartige Messeinrichtungen umfassen.
- Schritt II: Erfassen einer jeweiligen 3-dimensionalen Position der Statoroberfläche relativ zum Profilsensor für eine Gesamtmenge an Messpunkten mittels des Profilsensors;

In diesem Schritt wird für jeden Messpunkt dessen 3-dimensionale Position (also typischerweise seine Position im Messfeld (das Messfeld ist quasi ein zweidimensionales Feld mit Messpunkten) und eine Abstandsinformation) erfasst. Bei einem Liniensensor, unter dem der Stator rotiert wird, kann die Position im Messbereich bspw. dadurch bestimmt werden, dass die Drehposition des Stators bei einer bestimmten Linienmessung erfasst wird. Die einzelnen Linienmessungen werden dann entsprechend dem jeweiligen Rotationswinkel aneinander angefügt um den vollständigen Messbereich zu erhalten.

Bei einem Laserliniensensor wird beispielsweise für jeden Messpunkt entlang der Messlinie (Erfassungsbereich) der Abstand zum Sensor mittels einer Laufzeitmessung des Lasersignals ermittelt. Die Position der Messpunkte entlang der Messlinie des Sensors wird gemeinsam mit Informationen über die Rotation des Stators unter dem Sensor verwendet, um den einzelnen Messpunkten deren Position im Messfeld zuzuordnen.

Ein Flächensensor kann Teile der Oberfläche des Stators vermessen oder so dimensioniert sein, dass er in einem Messschritt die komplette Oberfläche vermessen kann. Ein Punktsensor kann verwendet werden, um Schritt für Schritt jeden Messpunkt im gewünschten Messbereich abzutasten und den jeweiligen Höhenwert zu messen.
- Schritt III: Bestimmen eines Richtungsindikators, insbesondere einer Oberflächennormalen, für jeden Messpunkt wenigstens einer Teilmenge der Gesamtmenge der erfassten Messpunkte, wobei der Richtungsindikator ein Indikator für die lokale Orientierung der vermessenen Oberfläche im Bereich des Messpunkts ist;

Typischerweise wird der Richtungsindikator eines Messpunkts ermittelt, indem auch umliegende Messpunkte bzw. deren Position im Messfeld und die Höheninformation berücksichtigt werden. Dies ist jedoch nicht zwingend, andere Arten der Ermittlung sind möglich im Sinne der Erfindung. Es kann bspw. ein Sensor verwendet werden, der neben der Höheninformation auch einen Wert für die lokale Oberflächenausrichtung erfasst (bspw. über Berücksichtigung der Intensität des reflektierten Signals oder ähnlichem).

Der Richtungsindikator kann beispielsweise die lokale Flächennormale sein. Zur Bestimmung des Richtungsindikators bzw. der Flächennormalen kann bspw. anhand der umliegenden Messpunkte ein Flächenverlauf der vermessenen Oberfläche im Bereich der betrachteten Messpunkte ermittelt bzw. approximiert werden und aus diesem der Richtungsindikator abgeleitet werden. Es kann bspw. eine Fläche mithilfe der Punkte in der Nachbarschaft approximiert werden, es kann dann die Normale dieser fiktiven Fläche ermittelt werden, welche dann als die Normale im betrachteten Punkt verwendet werden kann. Zur Approximation kann beispielsweise eine Flächenfunktion iterativ and die Punkte in der Nachbarschaft angefitted werden. Es kann in einer anderen Ausführung ein linearer Flächenverlauf zwischen den einzelnen Messpunkten angenommen werden. Andere Approximationen des Flächenverlaufs sind ebenso im Sinne der Erfindung.
- Schritt IV: Identifizieren der Messpunkte, die zu den freien Enden der Steckspulen gehören, wobei das Identifizieren umfasst:

Dieser Schritt umfasst mehrere Unterschritte und dient dazu, diejenigen Messpunkte aus der Gesamtmenge der erfassten Messpunkte herauszusuchen, die die Messdaten bezüglich der freien Enden der Steckspulen darstellen.

Ein zu Schritt IV gehörender Unterschritt a) umfasst das Identifizieren aller Messpunkte in der Gesamtmenge der erfassten Messpunkte, deren Höhenwert in einem Toleranzbereich um eine vermutete Position der freien Enden in Höhenrichtung liegt.

Die vermutete Position der freien Enden kann auf Kenntnissen bezüglich der Statorgeometrie beruhen. Die vermutete Position kann auch auf einer Bewertung der Messdaten beruhen. Bspw. indem geprüft wird, in welcher Ebene in Höhenrichtung sich eine bestimmte Menge an Messpunkten befindet, kann darauf geschlossen werden, dass in der Nähe dieser Ebene die freien Enden liegen. Im Unterschritt a) werden alle Punkte identifiziert die in Höhenrichtung innerhalb eines Toleranzbereichs um die vermutete Position der freien Enden in Höhenrichtung liegen. Es werden also auch Messpunkte in Höhenbereichen mitidentifiziert, die um die tatsächliche Position der Enden herum liegen.

In einem Unterschritt b) erfolgt ein Zuordnen dieser identifizierten Messpunkte zu einer Menge an Kandidaten für Punkte der freien Enden. Die identifizierten Messpunkte werden also im Folgenden als Kandidaten behandelt, die Messpunkte auf der Oberfläche der freien Enden darstellen könnten. Da im Schritt a) ein Toleranzbereich berücksichtigt wurde, umfassen die Kandidaten auch Messpunkte, die unter der eigentlichen Oberfläche der freien Enden liegen und sich beispielsweise auf den Seitenflächen der Leiterstücke befinden, die in die Oberflächen der freien Enden übergehen. Die Kandidaten umfassen also nicht nur Messpunkte, die tatsächlich auf den Oberflächen der freien Enden angeordnet sind.

In einem Unterschritt c) erfolgt ein Gruppieren der Kandidaten in mögliche freie Enden, wobei weitere Kandidaten mit einem Kandidaten zu einem möglichen freien Ende gruppiert werden, wenn sie zu dem Kandidaten oder einem bereits mit ihm gruppierten Kandidaten einen Abstand haben, der gleich oder kleiner einem ersten Maximalabstand ist (Berechnung über die erfasste 3-dimensionale Position der Kandidaten). Hier werden die Kandidaten also in Gruppen zusammengefasst, wobei Messpunkte aus der Menge der Kandidaten zusammengruppiert werden, die zueinander innerhalb des ersten Maximalabstands liegen oder miteinander über weitere Kandidaten verbunden sind, die zueinander jeweils innerhalb des ersten Maximalabstands liegen. Der Abstand zweier Kandidaten kann dabei insbesondere basierend auf der vorher ermittelten 3-dimensionalen Position des entsprechenden Messpunkts ermittelt werden.

Dadurch werden alle Kandidaten jeweils zusammengruppiert, die Messpunkten entsprechen, die die Oberfläche eines jeweiligen freien Endes betreffen. Da die Kandidaten nur Messpunkte umfassen, die in einem Toleranzbereich um die vermutete Position der freien Enden in Höhenrichtung liegen, umfassen die Kandidaten keine Messpunkte, die in den Zwischenräumen zwischen den Oberflächen der freien Enden liegen (Keine Messpunkte an Positionen an denen sozusagen von oben auf den Stator gesehen keine Leiterstücke angeordnet sind, sondern sich das Statorblechpaket befindet). Kandidaten an den Kanten der freien Enden oder auf den Seitenflächen der Leiterstücke haben daher in Richtung von der Oberfläche des freien Endes wegweisend keine benachbarten Kandidaten, die innerhalb des ersten Maximalabstands zu ihnen liegen. Dadurch werden die Kandidaten der jeweiligen Enden der Leiterstücke getrennt zueinander gruppiert.

So wird je freiem Ende bzw. je zusammenhängender freier Oberfläche (ein freies Ende kann dabei auch die Oberseiten zweier miteinander bspw. durch Verschweißen verbundener Leiterstücke umfassen) eine Gruppe von Kandidaten gebildet.

In einem Unterschritt d) erfolgt je möglichem freiem Ende, das mindestens eine Mindestmenge an zugeordneten Kandidaten umfasst, ein Auswählen jeweils wenigstens eines Kandidaten, dessen Richtungsindikator in einem Sollwertbereich liegt (Oberfläche weißt lokal Sollorientierung auf), als identifizierter Messpunkt auf dem jeweiligen freien Ende.

Aus den in Schritt c) gebildeten Gruppen (diese entsprechen den freien Enden) wird im Schritt d) mindestens jeweils ein Kandidat bzw. Messpunkt ausgewählt und dieser wird im weiteren als ein identifizierter Messpunkt behandelt. Um im Schritt d) ausgewählt zu werden, muss der Richtungsindikator des Kandidaten in einem Sollwertbereich liegen. Die durch den Messpunkt beschriebene Oberfläche muss also eine bestimmte Ausrichtung haben. Steht der Stator mit den freien Enden nach oben ausgerichtet im Messbereich des Profilsensors so verläuft hier beispielsweise die Oberfläche der freien Enden typischerweise horizontal erstreckt. Die entsprechende Flächennormale würde also in vertikale Richtung weisen. Entsprechend würde als identifizierter Messpunkt ein Kandidat ausgewählt werden, dessen Flächennormale in vertikale Richtung (innerhalb des Sollwertbereichs) zeigt (wenn die Flächennormale als Richtungsindikator verwendet wird).

In einem Unterschritt e) erfolgt für jeden der identifizierten Messpunkte ein Zuordnen der weiteren Messpunkte aus der Gesamtmenge an Messpunkten aus Schritt II zu dem freien Ende des jeweiligen identifizierten Messpunkts. Die Gruppierung in diesem Schritt setzt dabei voraus, dass die weiteren Messpunkte, die dem freien Ende zugeordnet werden, die beide der nachfolgenden Kriterien erfüllen:
Kriterium e1): die weiteren Messpunkte haben zu dem identifizierten Messpunkt oder einem anderen dem freien Ende bereits zugeordneten Messpunkt einen Abstand, der gleich oder kleiner einem zweiten Maximalabstand ist. Dieses Kriterium entspricht dem in Unterschritt c) verwendeten Kriterium zum Gruppieren von Kandidaten. Es werden also sozusagen Messpunkte von zusammenhängenden Flächen zusammengruppiert.

Als weiteres Kriterium e2) werden nur Messpunkte einem freien Ende zugeordnet, deren Richtungsindikator in einem Sollwertbereich liegt. Es werden also bspw. nur diejenigen Punkte dem freien Ende zugeordnet, die eine Flächennormale aufweisen, die in vertikale Richtung (im Rahmen des Sollwertbereichs) weist. Auf diese Weise wird die Zuordnung von Messpunkten zu einem freien Ende quasi an den Kanten der Oberflächen abgebrochen und es werden nur diejenigen Messpunkte gruppiert, die zur Oberfläche gehören. Die Messpunkte zu den in die Oberfläche übergehenden Seitenflächen der Leiterstücke werden nicht zugeordnet, da ihr Richtungsindikator nicht in dem Sollwertbereich liegt. Bspw. weist deren Flächennormale in horizontale Richtung.

Wie bereits ausgeführt ist Teil der Erfindung auch eine Vorrichtung zur Erfassung von Hairpinpositionen mit einem Profilsensor mit einem Erfassungsbereich, wobei die Vorrichtung ausgebildet und eingerichtet ist, um ein Verfahren wie es eingangs und nachfolgend beschrieben ist durchzuführen. Die Ausführungen zu den Verfahren sind auch auf die Vorrichtung bezogen zu verstehen.

Teil der Erfindung ist auch die Verwendung einer erfindungsgemäßen Vorrichtung zur Durchführung eines der erfindungsgemäßen Verfahren.

Punkte aus der Gesamtmenge an Messpunkten aus Schritt II, die im Unterschritt e) keinem der identifizierten Messpunkte und damit keinem freien Ende zugeordnet werden, können explizit als nicht zu einem freien Ende gehörig identifiziert werden.

Die obigen Ausführungen beschreiben das erfindungsgemäße Verfahren im Detail. Das Verfahren lässt sich in groben Zügen auch vereinfacht ausgedrückt beschreiben. Diese vereinfachte Beschreibung kann jedoch nicht beschränkend für das oben beschriebene erfindungsgemäße Verfahren verstanden werden.

In einfacher Weise ausgedrückt wird bei dem Verfahren also grob gesagt zunächst der Stator in den Messbereich des Profilsensors eingebracht. Der Profilsensor erfasst dann quasi "von oben" (auf die nach oben hinausragenden Steckspulen blickend) ein dreidimensionales Profil des Stators, sodass die Position der einzelnen Steckspulen bzw. deren freier Enden erkannt werden kann.

In den erfassten Messdaten werden anschließend die Messpunkte, die die Oberfläche der freien Enden der einzelnen Steckspulen charakterisieren, identifiziert. Dies erfolgt unter Durchführung der weiteren Schritte, die im Rahmen des erfindungsgemäßen Verfahrens durchgeführt werden.

Vereinfacht ausgedrückt werden dabei zunächst die Messpunkte betrachtet, die um eine vermutete Position der freien Enden herum liegen. Es wird bzgl. dieser Punkte geprüft, ob sie tatsächlich zu einem freien Ende gehören. Dies erfolgt, indem geprüft wird, ob ausreichend umliegende Messpunkte "auf gleicher Höhe" liegen. Von den Punkten, die gemeinsam mit einer ausreichenden Anzahl an umliegenden Punkten auf der richtigen Höhe liegen, wird ein Punkt je freiem Ende ausgewählt, wobei die Oberfläche an der Position dieses Punktes eine Erstreckung in die passende Richtung (typischerweise horizontal) haben muss.

Ausgehend von diesem ausgewählten Punkt werden die übrigen Punkte identifiziert, die tatsächlich zu einem freien Ende gehören. Hierzu wird geprüft, welche umliegenden Messpunkte ausreichend nahe beieinander liegen. Bei dieser Prüfung müssen die Punkte auch das Kriterium erfüllen, dass die vermessene Oberfläche an der jeweiligen Stelle (an dem Messpunkt) eine passende Richtung (im Normalfall horizontal erstreckt) aufweist. Durch die Prüfung der Richtung der Erstreckung der Oberfläche kann zuverlässig ein Erkennen der Kanten der freien Enden erfolgen und es können so die Oberflächen der freien Enden der Steckspulen erkannt werden.

Vor dem Teilschritt a) in Schritt IV kann eine Position des Blechpakets des Stators in Höhenrichtung ermittelt werden. Insbesondere in Teilschritt a) in Schritt IV kann die vermutete Position der freien Enden und der Toleranzbereich von der Position des Blechpakets des Stators aus berücksichtigt werden. Hierdurch können Informationen zur Statorgeometrie genutzt werden, um die Genauigkeit der Messung zu verbessern. Es können außerdem Positionierungsungenauigkeiten ausgeglichen werden.

Das Verfahren kann auch einen Schritt umfassen, in dem eine Drehstellung des Stators im Messbereich oder bezüglich eines Erfassungsbereichs des Profilsensors erfasst wird. Hierzu umfasst der Stator typischerweise eine Markierung, die eine bestimmte Position an seinem Umfang kennzeichnet. Eine derartige Markierung kann beispielsweise am Blechpaket des Stators angeordnet sein. Je nach Stator kann die Drehstellung des Stators auch aus der Anordnung der Steckspulen ableitbar sein im Sinne des Verfahrens. Hierzu kann in einem Schritt zur Ermittlung der Drehstellung eine grobe Vermessung der Positionen der Steckspulen erfolgen ohne das hier bereits die Genauigkeit der Vermessung des erfindungsgemäßen Verfahrens erreicht wird. Durch Erfassen der Drehstellung kann eine hohe Genauigkeit bei einfachem und einfach bedienbarer Sensortechnik erreicht werden.

Wie bereits erläutert, kann der Messbereich des Profilsensors aus einer Mehrzahl an Einzelmessungen im Laufe der Vermessung des Stators zusammengesetzt werden. Bspw. kann der Messbereich aus einer Reihe von um einen bestimmten Drehwinkel versetzt am Stator gemessenen linienartig verlaufenden Messpunktreihen zusammengesetzt sein. Der Erfassungsbereich beinhaltet die Menge an Messpunkten, die über den Profilsensor in einem Messvorgang erfasst werden kann. Der Messbereich wiederum umfasst die Summe an Messpunkten, die zur Vermessung des Stators bzw. seiner Oberfläche insgesamt verwendet werden, wobei diese in mehreren einzelnen Messvorgängen erfasst worden sein können. Der Messbereich kann also mehrere Einzelmessungen umfassen, die zeitlich versetzt erfasst wurden und unter Berücksichtigung einer Änderung der relativen Position zwischen Stator und Erfassungsbereich des Profilsensors sozusagen zu einer Gesamtmessung zusammengesetzt sind, die den Messbereich bildet. Hierdurch kann ein einfacher und zuverlässiger Sensor verwendet werden.

Es ist insbesondere vorgesehen, dass der Erfassungsbereich eine linienartige Reihe an Messpunkten umfasst, die sich über die Breite einer Seite des Stators erstreckt. Ein linienartiger Erfassungsbereich umfasst insbesondere die radiale Erstreckung der im Wesentlichen auf konzentrischen Kreisbahnen angeordneten Steckspulen auf einer Seite des Stators von einer Rotationsachse des Stators aus betrachtet. Der Messbereich kann in der ebenen Erstreckung betrachtet insbesondere die Form einer Kreisringscheibe aufweisen. Ein Bereich um die Rotationsachse des Stators kann bei der Messung also insbesondere ausgespart sein. Auf diese Weise ist der Messbereich auf relevante Bereiche beschränkt und die Auflösung der Messung kann, bei gleichbleibendem messtechnischem Aufwand für den Profilsensor, erhöht werden.

Der Erfassungsbereich des Profilsensors kann ausgebildet sein, um im Verfahren eine linienartig verlaufende Reihe an Messpunkten in einem Messvorgang zu erfassen. Hierdurch können schnell und zuverlässig Linienprofile vermessen werden und der Erfassungsbereich des Profilsensors über den Stator bewegt werden. Beim Erfassen der 3-dimensionalen Position der Statoroberfläche in Schritt II können also mehrere Messvorgänge mit einem Ortsfest gehaltenen Profilsensor durchgeführt werden und der Stator kann zwischen jedem Messvorgang relativ zum Profilsensor bewegt, bspw. rotiert, werden. Hierdurch kann insbesondere die Position des Profilsensors genau vorgegeben werden. Es ist auch ein ortsfestes Verbleiben des Stators möglich und eine Bewegung des Profilsensors.

Der Profilsensor kann wenigstens eine Messeinrichtung umfassen, welche die 3-dimensionale Position der Oberfläche des Stators mittels Laser-Triangulation erfasst. Hierdurch kann eine hohe Messgeschwindigkeit und Genauigkeit erreicht werden.

Im Teilschritt e) des Schrittes IV kann bezüglich des Abstands bei Prüfung des Kriteriums e1) ein Abstand in Höhenrichtung anders gewichtet sein als einen Abstand in der Horizontalebene. Es kann also bspw. Positionsunterschieden in der Höhenposition ein höheres Gewicht zugerechnet werden. Abweichungen in Höhenrichtung könne also bspw. bei geringeren Abweichungen zu einem Abbruch führen, also zu einer Nichtzuordnung zu einem freien Ende.

Ein freies Ende kann ein einzelnes freies Ende einer einzigen Steckspule sein. Insbesondere kann hierbei die Position eines Sonderpins geprüft werden.

Wenigstens ein freies Ende kann ein gemeinsames freies Ende sein, das wenigstens die einzelnen freien Enden von zwei Steckspulen umfasst. Hierbei kann die Position der einzelnen Enden an sich als auch die Ausrichtung der einzelnen Enden zueinander geprüft werden. Bspw. kann der Gesamtumriss des gemeinsamen freien Endes ermittelt und geprüft werden, um bspw. einen Versatz in der Horizontalebene zu erkennen. Es kann auch eine Höhenversatz geprüft werden.

Wenigstens ein freies Ende kann ein gemeinsames freies Ende sein, das miteinander verschweißte einzelne freie Enden von wenigstens zwei Steckspulen umfasst. Dies kann zur Schweißnahtkontrolle eingesetzt werden. Es kann insbesondere auch eine Formanalyse unter Berücksichtigung des Höhenverlaufs der Schweißnaht durchgeführt werden.

### Figuren

Nachfolgend wird die Erfindung unter Bezugnahme auf die beiliegenden Zeichnungen erläuternd. In der Zeichnung zeigen:
Figur 1 eine schematische perspektivische Darstellung eines Stators mit eingesetzten und getwisteten Steckspulen;
Figur 2 eine schematische Darstellung einer Erfassung der Position von freien Enden von Steckspulen in einem symbolisch dargestellten Stator mittels eines Profilsensors;
Figur 3 eine schematische Darstellung des Messbereichs des Profilsensors aus Figur 1;
Figur 4 eine schematische Darstellung eines Ablaufschemas des erfindungsgemäßen Verfahrens;
Figur 5 eine schematische Darstellung einer Teilmenge an Messpunkten, deren Höhenwert in einem Toleranzbereich um eine vermutete Position der freien Enden in Höhenrichtung liegt;
Figur 6 eine Illustration des Vorgehens beim Verarbeiten der Messwerte; und
Figur 7 eine alternative Ausbildung eines Messbereichs.

In den Figuren tragen entsprechende Elemente und Bereiche gleiche Bezugszeichen. Nicht in allen Figuren sind sämtliche Bezugszeichen wiedergegeben.

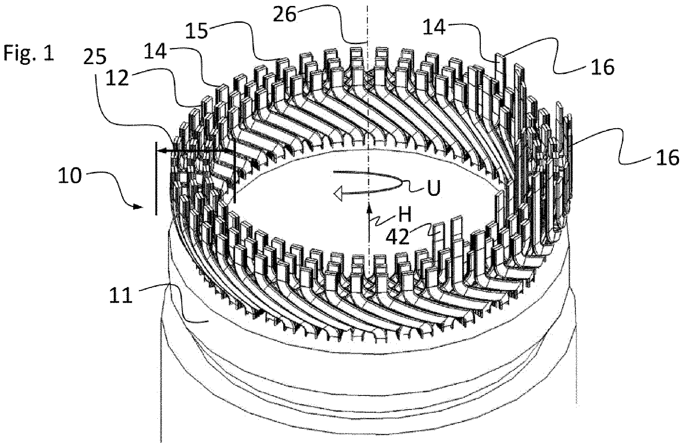

Figur 1 zeigt eine schematische perspektivische Darstellung eines Stators 10 mit in einem Blechpaket 11 eingesetzten und getwisteten Steckspulen 12. Die Steckspulen 12 sind auf in Umfangsrichtung U erstreckten Kreisbahnen angeordnet. Die Steckspulen 12 weisen jeweils abisolierte einzelne freie Enden 14 auf, welche in eine Höhenrichtung H erstreckt ausgerichtet sind. Die einzelnen freien Enden 14 sind dabei vorliegend derart angeordnet, dass überwiegend jeweils zwei einzelne freie Enden 14 zusammen positioniert sind und effektiv ein gemeinsames freies Ende 15 bilden, welches durch späteres Verschweißen stoffschlüssig verbunden wird. Die Steckspulen 12 sind überwiegend als im Wesentlichen U-förmig ausgebildete Hairpins ausgebildet (die U Form ist in der Figur nicht dargestellt). Der Stator 10 umfasst aber auch einzelne Sonderpins 16, die eine abweichende Geometrie haben, bspw. längere Schenkel mit einzelnen freien Enden 14, wobei diese einzelnen freien Enden 14 teilweise einzeln und nicht paarweise angeordnet sind. Verschiedene Pin-formen und Arten sind im Sinne der Erfindung möglich.

Ein freies Ende 14 im Sinne der Erfindung kann ein einzelnes freies Ende 14 sein, also das Ende eines Schenkels einer einzelnen Steckspule 12 sein, oder es kann im Sinne der Erfindung ein gemeinsames freies Ende 15 sein, das aus mehreren aneinander anliegenden einzelnen freien Enden 14 gebildet sein kann.

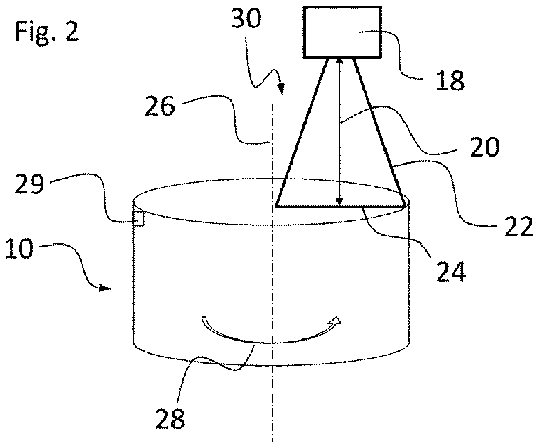

Figur 2 zeigt eine schematische Darstellung einer Erfassung der Position von freien Enden 14, 15 von Steckspulen 12 in einem symbolisch dargestellten Stator 10 mittels eines Profilsensors 18, der in einem Abstand 20 zur Oberfläche des Stators 10 angeordnet ist. Der Abstand 20 variiert dabei über die Oberfläche des Stators 10 hinweg, je nach Statorgeometrie.

Der Profilsensor 18 ist als Laserliniensensor ausgebildet und sendet ein fächerförmiges Lasersignal auf die Oberfläche des Stators 10, welches einen linienförmigen direkten Erfassungsbereich 24 ergibt, damit ist gemeint, dass in einem Messvorgang mehrere Messpunkte entlang des Erfassungsbereichs 24 vermessen werden. Das an der Oberfläche des Stators 10 im Bereich des linienförmigen direkten Erfassungsbereichs 24 reflektierte Lasersignal wird im Profilsensor 18 punktweise empfangen und über Messung der Signallaufzeit der jeweilige Abstand in jedem Messpunkt 32 im Erfassungsbereich 24 ermittelt. In Figur 1 ist auch eine alternative Erstreckung 25 eines möglichen Erfassungsbereichs 24 dargestellt, der die Breite einer Seite des Stators 10 erfasst. Um die komplette Oberfläche des Stators 10 zu erfassen wird der Stator 10 um eine Rotationsachse 26 rotiert, was durch den Pfeil 28 angedeutet ist. Auf diese Weise werden im vorliegenden Beispiel die unterschiedlichen Bereiche der Oberfläche des Stators 10 dem linienförmigen direkten Erfassungsbereich 24 zugeführt.

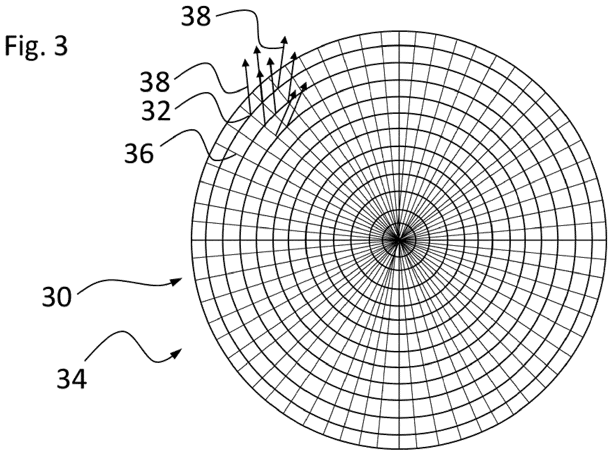

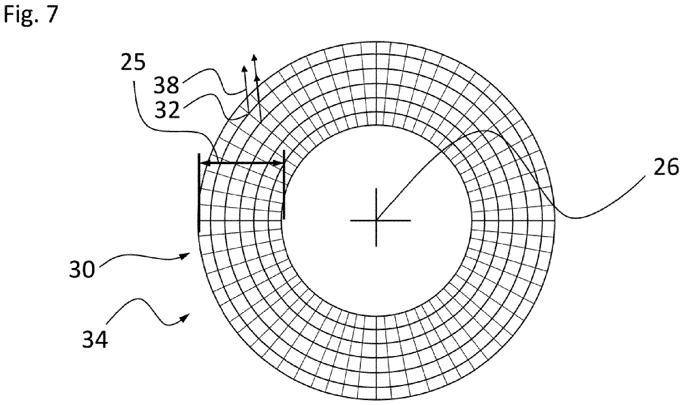

Der Stator kann eine Markierung 29 umfassen, mittels derer seine Drehstellung bezüglich des direkten Erfassungsbereichs 24 bzw. seine Position in einem Gesamtmessbereich bzw. Messbereich 30 eindeutig identifizierbar ist. Unter Berücksichtigung der jeweiligen Drehstellung des Stators 10 im Messbereich 30 des Profilsensors 18 werden die einzelnen linienartig angeordneten Messpunkte 32 zu einer Gesamtmessung zusammengefügt. Ein Beispiel eines derartig zusammengesetzten Messbereichs 30 mit allen Messpunkten 32 ist in den Figuren 3 und 7 (für die alternative Erstreckung 25) gezeigt. Andere Anordnungen der Messpunkte 32 im Messbereich 30 sind im Sinne der Erfindung denkbar.

Im Beispiel von Figur 3 entsprechen die Messpunkte 32, die auf einer vom Mittelpunkt des Messbereichs 30 radial auswärts laufenden Linie 36 angeordnet sind, jeweils einer Messung des Profilsensors 10 in einer Winkelstellung. Die einzelnen radial auswärts erstreckten Linien 36 sind jeweils um einen bestimmten Drehwinkel versetzt und decken gemeinsam eine vollständige Drehung (360° in bestimmten Drehschritten) ab.

Nachdem die 3-dimensionale Position der Statoroberfläche relativ zum Profilsensor 10 für die Gesamtmenge 34 an Messpunkten 32 (in jeder vorgesehenen Winkelstellung) mittels des Profilsensors 10 erfasst wurde (Schritt II des Verfahrens), erfolgt ein Bestimmen eines Richtungsindikators 38, insbesondere einer Oberflächennormalen, für jeden Messpunkt 32 wenigstens einer Teilmenge der Gesamtmenge 34 der erfassten Messpunkte 32 (Schritt III des Verfahrens). Der Richtungsindikator 38 ist ein Indikator für die lokale Orientierung der vermessenen Oberfläche im Bereich des jeweiligen Messpunkts 32. In Figur 3 sind zur besseren Übersichtlichkeit nur Richtungsindikatoren 38 an einigen der Messpunkte 32 dargestellt.

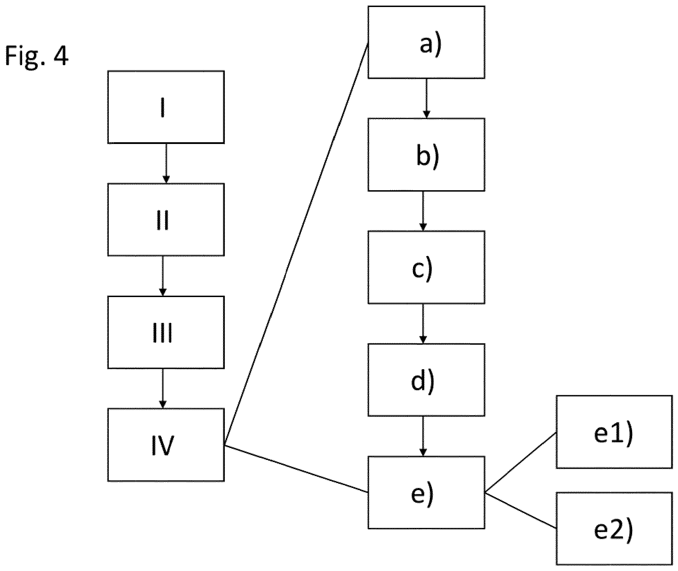

In einem Schritt IV des Verfahrens erfolgt ein Identifizieren der Messpunkte 32, die zu den freien Enden 15 der Steckspulen 12 gehören. Dieses Identifizieren läuft dabei in mehreren Teilschritten ab, was in Figur 4 in einem Ablaufdiagram dargestellt ist. Das Identifizieren umfasst:
a) Identifizieren aller Messpunkte 32 in der Gesamtmenge 34 der erfassten Messpunkte 32, deren Höhenwert in einem Toleranzbereich um eine vermutete Position der freien Enden 14, 15 in Höhenrichtung H liegt.

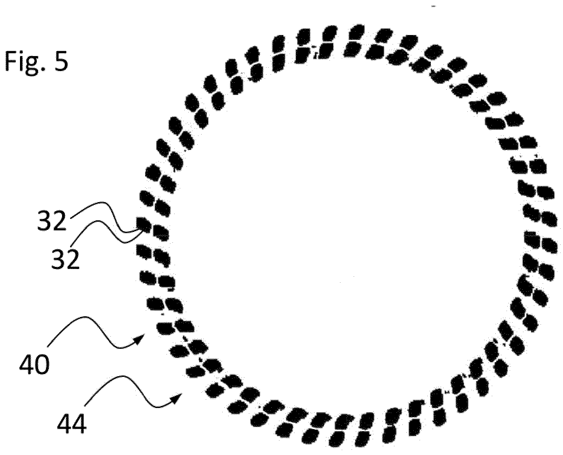

Hieraus ergibt sich eine Teilmenge 40 an Messpunkten 32 wie sie schematisch in Figur 5 dargestellt ist. Diese Teilmenge 40 umfasst überwiegend Messpunkte 32, die der Oberfläche der freien Enden 15 zugeordnet sind. Da in Teilschritt a) auch ein Toleranzbereich berücksichtigt wird, umfasst die Teilmenge 40 auch Messpunkte 32, die den Oberfläche an den von den freien Enden 15 abfallenden Seitenflächen 42 (siehe Figur 1) der Steckspulen 12 zugeordnet sind.

In einem Teilschritt b) erfolgt ein Zuordnen dieser identifizierten Messpunkte 32, also der in Teilschritt a) identifizierten Messpunkte 32 im Toleranzbereich in Höhenrichtung, zu einer Menge an Kandidaten 44 für Messpunkte 32 der freien Enden 15.

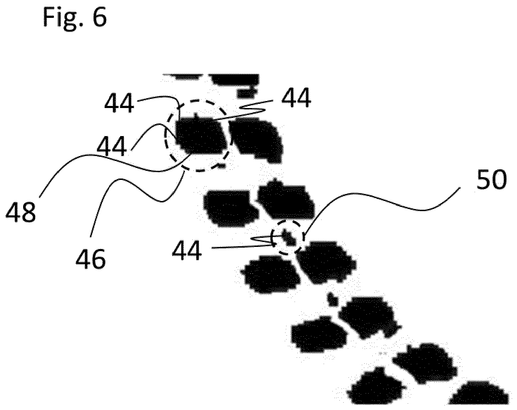

In einem Teilschritt c) erfolgt ein Gruppieren der Kandidaten 44 in mögliche freie Enden 46. Ein derartiges Gruppieren ist in Figur 6 für einen Teil der in Figur 5 dargestellten Kandidaten 44 illustriert. Weitere Kandidaten 44 werden dabei mit einem Kandidaten 44 zu einem möglichen freien Ende 46 gruppiert, wenn sie zu dem Kandidaten 44 oder einem bereits mit ihm gruppierten Kandidaten 44 einen Abstand haben, der gleich oder kleiner einem ersten Maximalabstand ist. Die Berechnung des Abstands erfolgt dabei über die erfasste 3-dimensionale Position der jeweiligen Kandidaten 44 bzw. der Messpunkte 32, die als Kandidaten 44 identifiziert wurden.

In einem Schritt d) erfolgt je möglichem freiem Ende 46, das eine Mindestmenge an zugeordneten Kandidaten 44 oder mehr umfasst, ein Auswählen jeweils wenigstens eines Kandidaten 44, dessen Richtungsindikator 38 in einem Sollwertbereich liegt (Oberfläche weist lokal Sollorientierung auf), als identifizierter Messpunkt 48 auf dem jeweiligen freien Ende 15. Durch das Voraussetzen der Mindestmenge werden nur solche möglichem freiem Ende 46 berücksichtigt bzw. als tatsächliche freie Enden behandelt, die eine ausreichend große Anzahl an Messpunkten 32 bzw. Kandidaten 44 umfassen. Hierdurch werden kleinere Gruppen 50 (siehe Figur 6) an Kandidaten 44 bzw. zusammenliegenden Messpunkten 32 nicht weiter betrachtet. Man kann davon ausgehen, dass diese kleinere Gruppen 50 keine tatsächlichen freien Enden darstellen, da sie zu wenige Messpunkte 32 auf Höhe der freien Enden 15 der Steckspulen umfassen und üblicherweise auf Messungenauigkeiten oder Artefakte zurückzuführen sind.

In einem Teilschritt e) erfolgt für jeden der identifizierten Messpunkte 48: Zuordnen der weiteren Messpunkte 32 aus der Gesamtmenge 34 an Messpunkten aus Schritt II zu dem freien Ende 15 des identifizierten Messpunkts 48, wobei weitere Messpunkte dem freien Ende zugeordnet werden, wenn die beiden Kriterien e1) und e2) erfüllt sind.

Das Kriterium e1) ist für weitere Messpunkte 32 aus der Gesamtmenge 34 an Messpunkten 32 erfüllt, wenn sie zu dem identifizierten Messpunkt 48 oder einem anderen dem freien Ende 15 bereits zugeordneten Messpunkt 32 einen Abstand haben, der gleich oder kleiner einem zweiten Maximalabstand ist. Die Berechnung des Abstands erfolgt dabei über die erfasste 3-dimensionale Position der Kandidaten 44 bzw. Messpunkte 32.

Das Kriterium e2) ist für weitere Messpunkte 32 aus der Gesamtmenge 34 an Messpunkten 32 erfüllt, wenn deren Richtungsindikator 38 in einem Sollwertbereich liegt.

Die Kriterien e1) und e2) führen dazu, dass bei geeigneter Auswahl von Maximalabstand und Sollwertbereich nur solche weiteren Messpunkte 32 dem freien Ende 15 eines identifizierten Messpunkts 48 zugeordnet werden, die eine bestimmte Oberflächenorientierung haben und einen Maximalabstand. Typischerweise sind dies nebeneinanderliegende Messpunkte 32 auf im Wesentlichen gleicher Höhe und mit horizontal erstreckter Oberfläche. Dies ist die typische Konfiguration für die Oberflächen der freien Enden 15.

Der Messbereich 30 kann, wie in Figur 7 dargestellt, rein in der ebenen Erstreckung betrachtet, insbesondere die Form einer Kreisringscheibe aufweisen. Ein Bereich um die Rotationsachse 26 des Stators 10 kann bei der Messung also insbesondere ausgespart sein.

## Patentansprüche

1. Verfahren zur Erfassung der Position von freien Enden (14, 15) von Steckspulen (12) in einem Stator (10), wobei das Verfahren umfasst:
I Platzieren des Stators (10) in einem Erfassungsbereich (24) eines Profilsensors (18), so dass eine Oberfläche des Stators (12) mit freien Enden (14, 15) sich im Erfassungsbereich (24) des Profilsensors (18) befindet;
II Erfassen einer jeweiligen 3-dimensionalen Position der Statoroberfläche relativ zum Profilsensor (18) für eine Gesamtmenge (34) an Messpunkten (32) mittels des Profilsensors (18);
III Bestimmen eines Richtungsindikators (38), insbesondere einer Oberflächennormalen, für jeden Messpunkt (32) wenigstens einer Teilmenge der Gesamtmenge (34) der erfassten Messpunkte (32), wobei der Richtungsindikator (38) ein Indikator für die lokale Orientierung der vermessenen Oberfläche im Bereich des Messpunkts (32) ist;
IV Identifizieren der Messpunkte (32), die zu den freien Enden (14, 15) der Steckspulen (12) gehören, wobei das Identifizieren umfasst:
a) Identifizieren aller Messpunkte (32) in der Gesamtmenge (34) der erfassten Messpunkte (32), deren Höhenwert in einem Toleranzbereich um eine vermutete Position der freien Enden (14, 15) in Höhenrichtung liegt;
b) Zuordnen dieser identifizierten Messpunkte (32) zu einer Menge an Kandidaten (44) für Punkte der freien Enden (14, 15);
c) Gruppieren der Kandidaten (44) in mögliche freie Enden (46), wobei weitere Kandidaten (44) mit einem Kandidaten (44) zu einem möglichen freien Ende (46) gruppiert werden, wenn sie zu dem Kandidaten (44) oder einem bereits mit ihm gruppierten Kandidaten (44) einen Abstand haben, der gleich oder kleiner einem ersten Maximalabstand ist;
d) je möglichem freiem Ende (46), das eine Mindestmenge (Y) an zugeordneten Kandidaten (44) umfasst, Auswählen jeweils wenigstens eines Kandidaten (44), dessen Richtungsindikator (38) in einem Sollwertbereich liegt, als identifizierter Messpunkt (48) auf dem jeweiligen freien Ende;
e) Für jeden der identifizierten Messpunkte (48):
Zuordnen weiterer Messpunkte (32) aus der Gesamtmenge (34) an Messpunkten (32) aus Schritt II zu dem freien Ende (14, 15) des identifizierten Messpunkts (48), wobei weitere Messpunkte (32) dem freien Ende (14, 15) zugeordnet werden,
e1) wenn sie zu dem identifizierten Messpunkt (48) oder einem anderen dem freien Ende (14, 15) zugeordneten Messpunkt (32) einen Abstand haben, der gleich oder kleiner einem zweiten Maximalabstand ist;
und
e2) wenn deren Richtungsindikator (38) in einem Sollwertbereich liegt.

2. Verfahren nach Anspruch 1, **dadurch gekennzeichnet, dass** vor dem Teilschritt a) in Schritt IV eine Position des Blechpakets (11) des Stators (12) in Höhenrichtung (H) ermittelt wird und dass insbesondere in Teilschritt a) in Schritt IV die vermutete Position der freien Enden (14, 15) und der Toleranzbereich von der Position des Blechpakets (11) des Stators (10) aus berücksichtigt werden.

3. Verfahren nach einem der vorigen Ansprüche, **dadurch gekennzeichnet, dass** es einen Schritt umfasst, in dem eine Drehstellung des Stators (10) im Messbereich (30) oder bezüglich eines Erfassungsbereichs (24) des Profilsensors (18) erfasst wird.

4. Verfahren nach einem der vorigen Ansprüche, **dadurch gekennzeichnet, dass** der Messbereich (30) mehrere Einzelmessungen umfasst, die zeitlich versetzt erfasst wurden und unter Berücksichtigung einer Änderung der relativen Position zwischen Stator (12) und Erfassungsbereich (24) des Profilsensors (18) zu einer Gesamtmessung zusammengesetzt sind, die den Messbereich (30) bildet.

5. Verfahren nach einem der vorigen Ansprüche, **dadurch gekennzeichnet, dass** der Erfassungsbereich (24) des Profilsensors (18) eine linienartig verlaufende Reihe an Messpunkten (32) in einem Messvorgang erfasst.

6. Verfahren nach einem der vorigen Ansprüche, **dadurch gekennzeichnet, dass** beim Erfassen der 3-dimensionalen Position der Statoroberfläche in Schritt II mehrere Messvorgänge mit einem Ortsfest gehaltenen Profilsensors (18) durchgeführt werden und der Stator (10) zwischen jedem Messvorgang relativ zum Profilsensor (18) bewegt wird.

7. Verfahren nach einem der vorigen Ansprüche, **dadurch gekennzeichnet, dass** der Profilsensor (18) wenigstens eine Messeinrichtung umfasst, die die 3-dimensionale Position der Statoroberfläche mittels Laser-Triangulation erfasst.

8. Verfahren nach einem der vorigen Ansprüche, **dadurch gekennzeichnet, dass** im Teilschritt e) des Schrittes IV der Abstand bei Prüfung des Kriteriums e1) einen Abstand in Höhenrichtung (H) anders gewichtet als einen Abstand in einer zur Höhenrichtung (H) orthogonalen Horizontalebene.

9. Verfahren nach einem der vorigen Ansprüche, **dadurch gekennzeichnet, dass** wenigstens ein freies Ende (14, 15) ein einzelnes freies Ende (14) einer einzigen Steckspule (12) ist.

10. Verfahren nach einem der vorigen Ansprüche, **dadurch gekennzeichnet, dass** wenigstens ein freies Ende (14, 15) ein gemeinsames freies Ende (15) ist, welches wenigstens die einzelnen freien Enden (14) von zwei Steckspulen (12) umfasst.

11. Verfahren nach einem der vorigen Ansprüche, **dadurch gekennzeichnet, dass** wenigstens ein freies Ende (14, 15) ein gemeinsames freies Ende (15) ist, welches miteinander verschweißte einzelne Enden von wenigstens zwei Steckspulen (12) umfasst.

12. Vorrichtung zur Erfassung von Hairpinpositionen mit einem Profilsensor (18) mit einem Erfassungsbereich (24), wobei die Vorrichtung ausgebildet und eingerichtet ist, um ein Verfahren nach einem der Ansprüche 1 bis 11 auszuführen.
